# EUROPEAN PATENT APPLICATION

(11) **EP 4 280 364 A1**
(43) Date of publication of application: **22.11.2023**
(21) Application number: 22920976.2
(22) Date of filing: 09.06.2022
(51) Int. Cl.: H01M 50/264, H01M 50/209, H01M 50/244, H01M 50/249

(54) **BATTERY AND ELECTRICAL DEVICE**

(30) Priority: 06.04.2022 CN 202220778829 U
(71) Applicant: Contemporary Amperex Technology Co., Limited, Ningde City, Fujian 352100 (CN)
(72) Inventor: LIN, Weilong, Ningde, Fujian 352100 (CN)
(74) Representative: Gong, Jinping
(86) International application number: PCT/CN2022/097779
(87) International publication number: WO 2023/193334

(57) **Abstract**

Embodiments of the present application disclose a battery and a power consumption device. The battery includes: a battery cell group, the battery cell group including a plurality of battery cells arranged along a first direction; two end plates respectively abutting against two end faces of the battery cell group disposed opposite to each other the two end faces being perpendicular to the first direction; and an insulating packing strap, the insulating packing strap including two end parts and a main body part connecting the two end parts, the two end parts being respectively fixed with the two end plates, and the main body part extending along the first direction, so that the insulating packing strap fixes the battery cell group. The battery and power consumption device according to the embodiments of the present application could improve assembly efficiency of the battery and improve safety performance of the battery.

## Description

### CROSS-REFERENCE TO RELATED APPLICATIONS

The present application claims priority to Chinese Patent Application CN 202220778829.4, filed on April 6, 2022 and entitled "BATTERY AND POWER CONSUMPTION DEVICE", the entire content of which is incorporated herein by reference.

### TECHNICAL FIELD

The present application relates to the field of battery technologies, and more particularly, to a battery and a power consumption device.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

In the development of the battery technology, in addition to improving electrochemical performance of a battery, how to improve assembly efficiency of a battery while ensuring safety performance of the battery is also an important problem that cannot be ignored.

### SUMMARY

Embodiments of the present application provide a battery and a power consumption device, which could improve assembly efficiency of the battery and improve safety performance of the battery.

In a first aspect, a battery is provided, and the battery includes: a battery cell group, the battery cell group including a plurality of battery cells arranged along a first direction; two end plates respectively abutting against two end faces of the battery cell group disposed opposite to each other, the two end faces being perpendicular to the first direction; and an insulating packing strap, the insulating packing strap including two end parts and a main body part connecting the two end parts, the two end parts being respectively fixed with the two end plates, and the main body part extending along the first direction, so that the insulating packing strap fixes the battery cell group.

Therefore, in the battery according to the embodiments of the present application, the insulating packing strap is fixed with the two end plates, respectively, and it is not necessary to fix the two end parts of the insulating packing strap to each other. If the insulating packing strap is provided by means of fixing the two end parts of the insulating packing strap to each other, the two end parts need to be fixed by means of hot-melt welding or the like, sharp burrs are easily produced in a fixing region, and the burrs may puncture a component disposed on an outer surface of the battery cell included in the battery cell group, for example, a separator disposed on the outer surface of the battery cell, leading to a problem of failure of the separator, further resulting in problems such as poor insulation or short circuit, and causing a safety risk. However, in the embodiments of the present application, the insulating packing strap is fixed on the two end plates, respectively, which can not only realize the fixing of the battery cells and simple and easy assembly, but also avoid the above problems, thereby improving the safety of the battery.

In some embodiments, each battery cell of the plurality of battery cells includes: a first wall and a second wall disposed opposite to each other, the main body part passing across the second wall; electrode terminals disposed on the first wall, the electrode terminals being configured to output electrical energy; and a pressure relief mechanism disposed on the first wall, the pressure relief mechanism being configured to be actuated when an internal pressure or temperature of each battery cell reaches a threshold, to relieve the internal pressure of each battery cell.

In this way, the insulating packing strap and the end plates can limit the movement of the plurality of battery cells in the first direction, and the insulating packing strap does not need to pass across the first wall, not affecting the electrode terminals and the pressure relief mechanism disposed on the first wall.

In some embodiments, the battery further includes: a box configured to accommodate the battery cell group, the box including a third wall, and second walls of the plurality of battery cells being fixed to the third wall. Since the insulating packing strap passes across the second walls, the separation and insulation between the second walls of the battery cells and the third wall of the box can be realized through the insulating packing strap without an additional insulating structure, which saves the insulating material and facilitates processing, improving the production efficiency of the battery.

In some embodiments, the two end parts include a first end part, and the first end part includes a fixing region; and the two end plates include a first end plate, a surface of the first end plate away from the battery cell group is provided with a fixing structure, and the fixing region is fixed with the fixing structure to fix the first end part to the first end plate.

At least part of the region of the first end of the insulating packing strap is the fixing region. The relative fixing between the first end part and the first end plate can be realized by the fixing between the fixing region and the fixing structure of the first end part, which can be realized more easily and has a simple assembly process in comparison with the fixing by means of bonding, welding, or the like.

In some embodiments, the first end part further includes a connecting region, and the fixing region is connected with the main body part through the connecting region; and the surface of the first end plate away from the battery cell group is provided with a restraint structure, and the restraint structure is configured to limit a position of the connecting region.

The position of the connecting region on the first end plate can be limited through the restraint structure, avoiding the fixing of the fixing region of the first end part, and mislocation of another region may cause the movement or mislocation of the main body part, and further affect the stability of the battery.

In some embodiments, the restraint structure includes two protruding structures protruding from the surface of the first end plate away from the battery cell group toward a direction away from the first end plate, the two protruding structures have a first gap in a second direction, the connecting region is located in the first gap to limit the position of the connecting region, and the second direction is a width direction of the connecting region. By disposing the connecting region in the first gap extending along the second direction, the movement of the connecting region can be limited in the first gap, avoiding the displacement of the connecting region in other directions.

In some embodiments, the two protruding structures are arranged along the second direction. The two protruding structures included in the restraint structure are arranged and extend along the second direction, and the two protruding structures may be used as two rib structures, which can be used to limit the position of the connecting region, and to ease the collision between the first end plate and the box.

In some embodiments, the fixing region is provided with a through hole, the fixing structure includes a staple, and the staple passes through the through hole to fix the fixing region. The staple and the through hole are mutually matched. The staple only passes through the through hole to realize the fixing between the insulating packing strap and the first end plate, and the structure is simple, easily operates, and takes up little space.

In some embodiments, the fixing structure includes a slot, at least part of the connecting region is accommodated in the slot, the fixing region is located outside the slot, a width of the fixing region is greater than a width of the connecting region, the width of the fixing region is greater than a width of the slot along the second direction, so that the fixing region is incapable of passing through the slot along a third direction to fix the fixing region with the fixing structure, the second direction is a width direction of the connecting region, and the third direction is perpendicular to the second direction and the first direction.

In some embodiments, the fixing structure includes: a first protruding structure and a second protruding structure protruding from the surface of the first end plate away from the battery cell group toward a direction away from the first end plate, the first protruding structure and the second protruding structure are arranged along the second direction, and the first protruding structure and the second protruding structure have a second gap in the second direction to form the slot.

The first protruding structure and the second protruding structure may be rib structures on the surface of the first end plate, and may be used to form the slot and further to ease the collision between the first end plate and the box. In the way, it is not necessary to additionally provide another structure as the fixing structure, which facilitates realization and saves components and space.

In some embodiments, the battery cell group corresponds to at least two insulating packing straps. If the battery cell group is provided with only one insulating packing strap, it is necessary to increase the width of the insulating packing strap in order to ensure that the insulation packaging strap meets the fixing requirements of the plurality of battery cells in the battery cell group and the structure is relatively stable. However, the insulating packing strap with a great width is not easily fixed with the two end plates, and increases the assembly difficulty. Therefore, the battery cell group may be set to correspond to at least two insulating packing straps, which can not only ensure that the fixing requirements of the plurality of battery cells in the battery cell group are met and the structure is stable, but also facilitate the realization of the relative fixing between each insulating packing strap and the end plates.

In a second aspect, a power consumption device is provided, including: the battery in the first aspect or any embodiment in the first aspect.

In some embodiments, the power consumption device is a vehicle, a ship or a spacecraft.

### BRIEF DESCRIPTION OF THE DRAWINGS

In order to illustrate the technical solutions in the embodiments of the present application more clearly, brief description will be made below to the accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic diagram of a vehicle according to an embodiment of the present application;
FIG. 2 is a schematic diagram of a partial structure of a battery according to an embodiment of the present application;
FIG. 3 is a schematic diagram of a partial exploded structure of a battery according to an embodiment of the present application;
FIG. 4 is a schematic diagram of a bottom structure of a battery cell group according to an embodiment of the present application;
FIG. 5 is a schematic diagram of a first end plate fixed with a first end part according to an embodiment of the present application;
FIG. 6 is a schematic structural diagram of a first end plate according to an embodiment of the present application;
FIG. 7 is a schematic diagram of a partial structure of an insulating packing strap according to an embodiment of the present application;
FIG. 8 is a schematic diagram of a first end plate fixed with a first end part according to another embodiment of the present application;
FIG. 9 is a schematic structural diagram of a first end plate according to another embodiment of the present application;
FIG. 10 is a schematic diagram of a partial structure of an insulating packing strap according to another embodiment of the present application;
FIG. 11 is a schematic diagram of a first end plate fixed with a first end part according to a further embodiment of the present application; and
FIG. 12 is a schematic diagram of a partial structure of an insulating packing strap according to a further embodiment of the present application.

### DESCRIPTION OF EMBODIMENTS

Technical solutions in embodiments of the present application will be described below with reference to accompanying drawings.

To make the objectives, technical solutions and advantages of the embodiments of the present application clearer, the technical solutions in the embodiments of the present application will be described clearly below with reference to the accompanying drawings in the embodiments of the present application. Apparently, the described embodiments are merely some but not all of the embodiments of the present application. All the other embodiments obtained by those of ordinary skill in the art based on the embodiments of the present application without any inventive effort shall fall within the scope of protection of the present application.

Unless otherwise defined, all technical and scientific terms used in the present application have the same meanings as those commonly understood by those skilled in the art to which the present application belongs. The terms used in the present application are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions. The terms such as "first" and "second" in the specification and the claims of the present application as well as the drawings described above are used to distinguish different objects, and shall not be used to indicate a specific order or primary-secondary relationship.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described in the present application may be combined with another embodiment.

In the description of the present application, it should be noted that, unless explicitly specified and defined otherwise, terms "installation", "interconnection", "connection" and "attachment" should be understood in a broad sense; for example, they may be either a fixed connection, or a detachable connection, or an integrated connection; and they may be either a direct connection, or an indirect connection through an intermediate medium, or communication between interiors of two elements. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists alone, both A and B exist, and B exists alone. In addition, the character "/" herein generally indicates that the associated objects before and after the character are in an "or" relationship.

In the embodiments of the present application, the same reference signs represent the same components, and detailed description of the same components is omitted in different embodiments for brevity. It should be understood that dimensions such as thickness, length and width of various components in the embodiments of the present application shown in the drawings, as well as dimensions of the overall thickness, length and width of an integrated apparatus are merely illustrative, and should not constitute any limitation to the present application.

In the present application, "a plurality of" means two or more (including two). Similarly, "a plurality of groups" means two or more groups (including two groups), and "a plurality of sheets" means two or more sheets (including two sheets).

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is also not limited in the embodiments of the present application. The battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box may avoid liquid or other foreign matters to affect charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, and the positive electrode current collector not coated with the positive active material layer protrudes from the positive electrode current collector coated with the positive active material layer, and the positive electrode current collector not coated with the positive active material layer serves as a positive tab. In an example of a lithium-ion battery, the material of the positive electrode current collector may be aluminum, and the positive active material may be lithium cobalt oxides, lithium iron phosphate, ternary lithium, lithium manganate, or the like. The negative electrode sheet includes a negative electrode current collector and a negative active material layer. The negative active material layer is coated on a surface of the negative electrode current collector, the negative electrode current collector not coated with the negative active material layer protrudes from the negative electrode current collector coated with the negative active material layer, and the negative electrode current collector not coated with the negative active material layer serves as a negative tab. The material of the negative electrode current collector may be copper, and the negative active material may be carbon, silicon, or the like. In order to ensure that no fusing occurs when a large current passes, there are a plurality of positive tabs which are stacked together, and there are a plurality of negative tabs which are stacked together. The material of the separator may be polypropylene (polypropylene, PP) or polyethylene (polyethylene, PE), or the like. In addition, the electrode assembly may be a winding structure or a laminated structure, and the embodiments of the present application are not limited thereto.

With the development of the battery technology, it is necessary to consider design factors in multiple aspects simultaneously, for example, performance parameters, such as energy density, cycle life, discharge capacity, C-rate and other performance parameters. In addition, production efficiency and safety of a battery should also be considered. For example, during the assembly of the battery, assembly efficiency of the battery should be improved, and the stability of a plurality of battery cells in the battery should be ensured, to ensure that even if the battery vibrates during the use of the battery, each battery cell can maintain relative stability, avoiding problems such as failure of electrical connection due to displacement of the battery cells, and further avoiding the influence on the performance of the battery. Then, how to improve stability of battery cells in a battery during assembly of the battery is a very important problem.

The embodiments of the present application provide a battery and a power consumption device. The battery includes a battery cell group, and the battery cell group includes a plurality of battery cells arranged along a first direction; two end plates are respectively disposed at two ends of the battery cell group disposed opposite to each other, and the two end plates are perpendicular to the first direction; and the battery further includes an insulating packing strap, two end parts of the insulating packing strap are respectively fixed with the two end plates, the insulating packing strap further includes a main body part for connecting the two end parts, and the main body part extends along the first direction, so that the insulating packing strap can fix the battery cell group. The insulating packing strap of the battery is fixed with the end plates at both sides of the battery cell group, and it is not necessary to fix the two end parts of the insulating packing strap to each other. If the insulating packing strap is provided by means of fixing the two end parts of the insulating packing strap to each other, the two end parts need to be fixed by means of hot-melt welding or the like, sharp burrs are easily produced in a fixing region, and the burrs may puncture a separator on an outer surface of the battery cell included in the battery cell group, leading to a problem of failure of the separator, further resulting in problems such as poor insulation or short circuit, and causing a safety risk. However, the insulating packing strap is fixed on the end plates, respectively, which can not only realize the fixing of the battery cells and simple and easy assembly, but also avoid the above problems, thereby improving the safety of the battery.

The technical solutions described in the embodiments of the present application are all applicable to various power consumption devices using batteries. The power consumption device may be a vehicle, a mobile phone, a portable device, a notebook computer, a ship, a spacecraft, an electric toy, an electric tool, and the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy, and an electric airplane toy; and the electric tool includes an electric metal cutting tool, an electric grinding tool, an electric assembling tool and an electric railway tool, such as an electric drill, an electric grinder, an electric spanner, an electric screwdriver, an electric hammer, an electric impact drill, an concrete vibrator and an electric planer. The above power consumption device is not specially limited in the embodiments of the present application.

For convenience of description, the following embodiments will be explained by an example that the power consumption device is a vehicle.

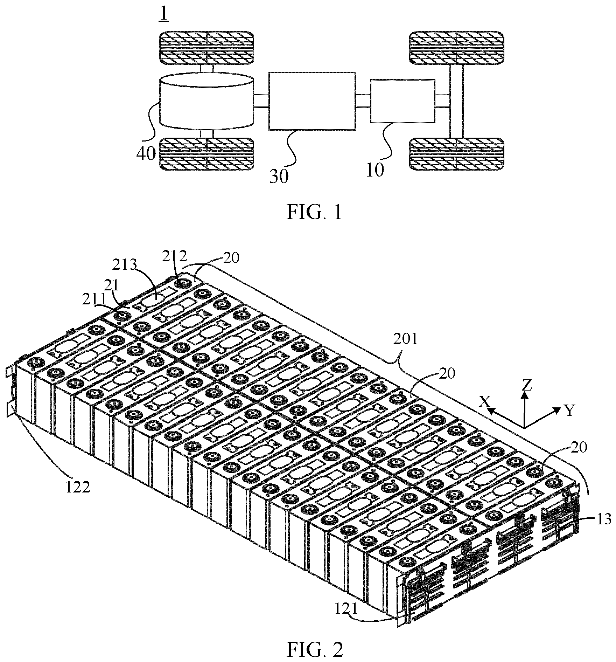

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. The vehicle 1 may be internally provided with a motor 40, a controller 30 and a battery 10, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power supply of the vehicle 1 for a circuit system of the vehicle 1, for example, for a working power demand of the vehicle 1 during startup, navigation and running. In another embodiment of the present application, the battery 10 may be used not only as an operation power supply of the vehicle 1, but also as a driving power supply of the vehicle 1, replacing or partially replacing fuel or natural gas to provide driving power for the vehicle 1.

In order to meet different power usage demands, the battery may include a plurality of battery cells, where the plurality of battery cells may be in series connection, parallel connection or series-parallel connection. The series-parallel connection refers to a combination of series connection and parallel connection. The battery may also be referred to as a battery pack. In some embodiments, the plurality of battery cells may be in series connection, parallel connection or series-parallel connection first to form a battery module, and then a plurality of battery modules are in series connection, parallel connection or series-parallel connection to form a battery. That is, a plurality of battery cells may directly form a battery, or may first form a battery module, and then battery modules form a battery.

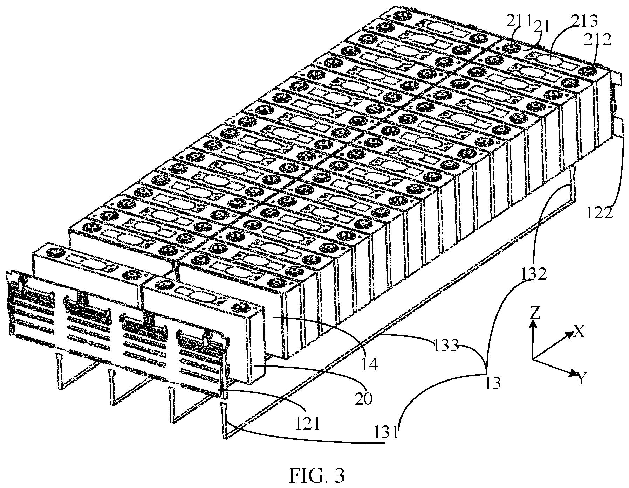

Specifically, FIG. 2 shows a schematic diagram of a partial structure of a battery 10 according to an embodiment of the present application, and FIG. 3 shows a schematic diagram of a partial exploded structure of a battery 10 according to an embodiment of the present application. As shown in FIG. 2 and FIG. 3, the battery 10 according to the embodiments of the present application includes: a battery cell group 201, the battery cell group 201 including a plurality of battery cells 20 arranged along a first direction X; two end plates respectively abutting against two end faces of the battery cell group 201 disposed opposite to each other, the two end faces being perpendicular to the first direction X; and an insulating packing strap 13, the insulating packing strap 13 including two end parts and a main body part 133 connecting the two end parts, the two end parts being respectively fixed with the two end plates, and the main body part 133 extending along the first direction X, so that the insulating packing strap 13 fixes the battery cell group 201.

It should be understood that, as shown in FIG. 2 and FIG. 3, the two end plates in the embodiments of the present application include a first end plate 121 and a second end plate 122; and the two end parts of the insulating packing strap 13 in the embodiments of the present application include a first end part 131 and a second end part 132. The two end parts in the embodiments of the present application are respectively fixed with the two end plates, which can be expressed as: the first end part 131 is fixed with the first end plate 121, and the second end part 132 is fixed with the second end plate 122.

It should be understood that the battery 10 according to the embodiments of the present application may include at least one battery cell group 201. If the battery 10 includes a plurality of battery cell groups 201, the plurality of battery cell groups 201 may be arranged along a second direction Y, and the second direction Y is perpendicular to the first direction X. For example, as shown in FIG. 2 and FIG. 3, the description will be made here by an example that the battery 10 includes two battery cell groups 201 arranged along the second direction Y, but the embodiments of the present application are not limited thereto.

If the battery 10 includes a plurality of battery cell groups 201, the plurality of battery cell groups 201 may share the first end plate 121 and the second end plate 122 for ease of assembly and fixing. For example, as shown in FIG. 2 and FIG. 3, in an example that the battery 10 includes two battery cell groups 201, the two battery cell groups 201 may share the first end plate 121 and the second end plate 122, that is, the same end faces of the two battery cell groups 201 are provided with the same first end plate 121 or the same second end plate 122. One the one hand, the end plates is processed easily, and the number of end plates is saved. On the other hand, the assembly is easy, and the fixing of the plurality of battery cell groups 201 can be realized through the two end plates without respective assembly and fixing, which improves the processing efficiency of the battery 10.

In the embodiments of the present application, two ends of the battery cell group 201 are respectively provided with the first end plate 121 and the second end plate 122; and the first end part 131 and the second end part 132 of the insulating packing strap 13 are respectively fixed with the first end plate 121 and the second end plate 122, and the main body part 133 of the insulating packing strap 13 extends along the first direction X. Then, the two end plates and the insulating packing strap 13 are relatively fixed and can be used together to limit the displacement of the battery cells 20 included in the battery cell group 201 in the first direction X, so as to ensure the stability of the battery cells 20 in the battery 10 and avoid problems such as failure of electrical connection due to the displacement between the battery cells 20.

The insulating packing strap 13 according to the embodiments of the present application is a strip structure, that is, the length of the insulating packing strap 13 is greater than the width. Each of the two end parts of the insulating packing strap 13 may include a short side of the insulating packing strap 13 and part of the region near the short side, and an area of each end part may be set according to practical application. For example, the area of each end part is usually smaller than an area of the main body part 133. For another example, the sum of the areas of the two end parts is also usually smaller than the area of the main body part 133.

It should be understood that the material of the insulating packing strap 13 according to the embodiments of the present application may be set according to practical application, and the materials of different regions of the insulating packing strap 13 may be the same or different. For example, in consideration of the stability of the part of the insulating packing strap 13 fixed with each end plate, different regions of the insulating packing strap 13 may be provided using different materials. For another example, the insulating packing strap 13 may be made of insulating elastic material, or the main body part 133 of the insulating packing strap 13 may be made of insulating elastic material, so that the insulating packing strap 13 has a certain degree of flexibility and hardness, a low tensile deformation rate, and has good insulation. In this way, during charging and discharging of the battery cells 20, even if the battery cells 20 expand and deform, the characteristic of elasticity of at least part of the insulating packing strap 13 can prevent the breakage of the insulating packing strap 13 and ensure the stability of the battery cells 20 in the battery 10. For example, the insulating packing strap 13 may be made of the material of polycarbonate (Polycarbonate, PC) and/or polyethylene terephthalate (polyethylene terephthalate, PET).

The insulating packing strap 13 according to the embodiments of the present application is fixed with the two end plates, respectively, and it is not necessary to fix the two end parts of the insulating packing strap 13 to each other. If the insulating packing strap 13 is provided by means of fixing the two end parts of the insulating packing strap 13 to each other, the two end parts need to be fixed by means of hot-melt welding or the like, sharp burrs are easily produced in a fixing region, and the burrs may puncture a component disposed on an outer surface of the battery cell 20 included in the battery cell group 201, for example, a separator disposed on the outer surface of the battery cell 20, leading to a problem of failure of the separator, further resulting in problems such as poor insulation or short circuit, an causing a safety risk. However, in the embodiments of the present application, the insulating packing strap 13 is fixed on the two end plates, respectively, which can not only realize the fixing of the battery cells 20 and simple and easy assembly, but also avoid the above problems, thereby improving the safety of the battery 10.

In some embodiments, the battery 10 may further include a heat insulating component 14, which is disposed between two adjacent battery cells 20 in the battery cell group 201 for blocking heat. For example, as shown in FIG. 2 and FIG. 3, for two adjacent battery cells 20, walls of the two adjacent battery cells 20 having the largest areas may be set to be attached to each other, and the heat insulating component 14 is disposed between the walls of the two battery cells 20 having the largest areas. Since the wall of the battery cell 20 having the largest area dissipates a large amount of heat, the heat insulating component 14 can effectively block the heat transfer between the two adjacent battery cells 20. Specifically, in case of thermal runaway of some battery cell 20, the heat insulating component 14 can effectively block heat transfer, preventing heat diffusion, avoiding thermal runaway of a larger range of battery cells 20 and the explosion of the battery 10, and improving the safety of the battery 10.

It should be understood that the battery 10 according to the embodiments of the present application may include a plurality of battery cells 20, and for any battery cell 20, the battery cell 20 may be a polyhedral structure. For example, the embodiments of the present application are explained by an example that the battery cell 20 is a cuboid. The battery cell group 201 includes a plurality of cuboid battery cells 20 arranged along the first direction X, and then, the whole battery cell group 201 is also presented as a cuboid with a regular shape, which is convenient for processing and assembly.

Moreover, as shown in FIG. 2 and FIG. 3, for the battery cell group 201 consisting of the rectangular battery cells 20, after the insulating packing strap 13 fixes the battery cell group 201, the first end part 131 and the second end part 132 of the insulating packing strap 13 are basically perpendicular to the main body part 133.

Specifically, during the assembly of the battery 10 according to the embodiments of the present application, the insulating packing strap 13 may be placed on an assembly clamp, the two end plates, the plurality of battery cells 20 and the heat insulating component 14 are stacked on the clamp in sequence and pressed into a group in the first direction X. After they are pressed to reach a designed standard length, the first end part 131 of the insulating packing strap 13 exceeding the first end plate 121 is pulled up toward a third direction Z, the second end part 132 exceeding the second end plate 122 is also pulled up toward the third direction Z to fix the first end part 131 with the first end plate121 and fix the second end part 132 with the second end plate 122, so as to complete the fixing of the insulating packing strap 13 with the battery cell group 201, and then they are placed in a box of the battery 10 to complete the assembly of the battery 10.

The battery cell 20 according to the embodiments of the present application may be provided with a plurality of components. For example, the battery cell 20 may include a shell, and the shell is a hollow structure. Specifically, the shell of the battery cell 20 may include a housing and a cover plate. The housing is a component configured to accommodate an electrode assembly, the housing may be a hollow structure with one end forming an opening, or the housing may be a hollow structure with two opposite ends forming openings. If the housing is a hollow structure with one end forming an opening, one cover plate may be provided; or if the housing is a hollow structure with two opposite ends forming openings, two cover plates may be provided, and the two cover plates respectively cover the openings of the two ends of the housing. The material of the housing may be various, such as copper, iron, aluminum, steel, aluminium alloy. The housing may be in a variety of shapes, such as a cylinder, a cuboid. Exemplarily, in FIG. 2 and FIG. 3, the housing is a cuboid structure.

The cover plate is a component that covers the opening of the housing to isolate the internal environment of the battery cell 20 from the external environment. The shape of the cover plate may match with the shape of the housing. As shown in FIG. 2 and FIG. 3, the housing is a cuboid structure, and the cover plate is a rectangular plate-like structure matching with the housing. The material of the cover plate may also be various, such as copper, iron, aluminum, steel, aluminium alloy, and the material of the cover plate may be the same as or different from that of the housing.

In the embodiments of the present application, the battery cell 20 may further include at least two electrode terminals for outputting electrical energy. Specifically, the at least two electrode terminals of the battery cell 20 may be disposed on the same wall or on different walls. For example, in an example that the battery cell 20 includes two electrode terminals, the two electrode terminals are disposed on the same wall. The electrode terminals may be configured to be electrically connected to the electrode assembly in the battery cell 20 to output electrical energy of the battery cell 20. As shown in FIG. 2 and FIG. 3, the electrode terminals may include a positive electrode terminal 211 and a negative electrode terminal 212, the positive electrode terminal 211 is configured to be electrically connected to a positive tab of the electrode assembly, and the negative electrode terminal 212 is configured to be electrically connected to a negative tab of the electrode assembly. The positive electrode terminal 211 and the positive tab may be directly or indirectly connected, and the negative electrode terminal 212 and the negative tab may be directly or indirectly connected.

In the embodiments of the present application, the battery cell 20 may further include a pressure relief mechanism 213. For the battery 10, the main safety risk comes from the charging and discharging process. In order to improve the safety performance of the battery 10, the battery cell 20 may be generally provided with a pressure relief mechanism 213. The pressure relief mechanism 213 refers to an element or component that is actuated when an internal pressure or temperature of the battery cell 20 reaches a predetermined threshold, to relieve the internal pressure or temperature. The predetermined threshold can be adjusted according to different design requirements. The predetermined threshold may depend on the material of one or more of a positive electrode sheet, a negative electrode sheet, an electrolytic solution, and a separator in the battery cell 20. The pressure relief mechanism 213 may be realized by means of notching or the like, or using a pressure-sensitive or temperature-sensitive element or component for example, that is, when the internal pressure or temperature of the battery cell 20 reaches the predetermined threshold, the pressure relief mechanism 213 is activated to form a channel for relieving the internal pressure or temperature.

The "actuation" mentioned in the present application means that the pressure relief mechanism 213 acts, so that the internal pressure and temperature of the battery cell 20 can be relieved. The action executed by the pressure relief mechanism 213 may include but be not limited to: at least a portion of the pressure relief mechanism 213 being fractured, torn or melted and so on. After the pressure relief mechanism 213 is actuated, high-temperature and high-pressure substances inside the battery cell 20 are discharged outwards from the pressure relief mechanism 213 as emissions. In this way, the pressure of the battery cell 20 can be relieved under a controllable pressure or temperature, thereby avoiding potential, more serious accidents.

The emissions from the battery cell 20 mentioned in the present application include but are not limited to: an electrolytic solution, dissolved or split positive and negative electrode sheets, fragments of a separator, high-temperature and high-pressure gas generated by reaction, flame, or the like.

The pressure relief mechanism 213 on the battery cell 20 has an important impact on the safety of the battery 10. For example, when short circuit, overcharge and other phenomena occur in the battery cell 20, it may lead to thermal runaway inside the battery cell 20, resulting in a sudden increase in pressure or temperature. In this case, the internal pressure and temperature can be released outward through the actuation of the pressure relief mechanism 213, to prevent the battery cell 20 from exploding and catching fire.

It should be understood that the pressure relief mechanism 213 according to the embodiments of the present application and the electrode terminals may be disposed on the same wall or on different walls. For example, as shown in FIG. 2 and FIG. 3, the embodiments of the present application are explained in an example that the pressure relief mechanism 213, the positive electrode terminal 211 and the negative electrode terminal 212 of the battery cell 20 are all disposed on a first wall 21 of the battery cell 20, and they are disposed on the same wall, which is convenient for processing and assembly.

It should be understood that the first wall 21 may be any wall of the battery cell 20. For example, in order to avoid the interaction between different battery cells 20 and to quickly discharge the internal heat and pressure of the battery cell 20 by the pressure relief mechanism 213, the pressure relief mechanism 213 is usually not disposed on walls mutually attached between two adjacent battery cells 20, that is, as shown in FIG. 2 and FIG. 3, the plurality of battery cells 20 may be mutually attached through walls having the largest areas, and then, the first wall 21 is not the wall of the battery cell 20 having the largest area to avoid affecting the pressure relief mechanism 213.

In addition, in order to avoid the influence of the insulating packing strap 13 on the electrode terminals or the pressure relief mechanism 213, the insulating packing strap 13 is usually set to not pass across the first wall 21. For example, the battery cell 20 may include a first wall 21 and a second wall 22 that are different, and the main body part 133 of the insulating packing strap 13 may pass across the second walls of the plurality of battery cells 20 to avoid affecting the electrode terminals and the pressure relief mechanisms 213.

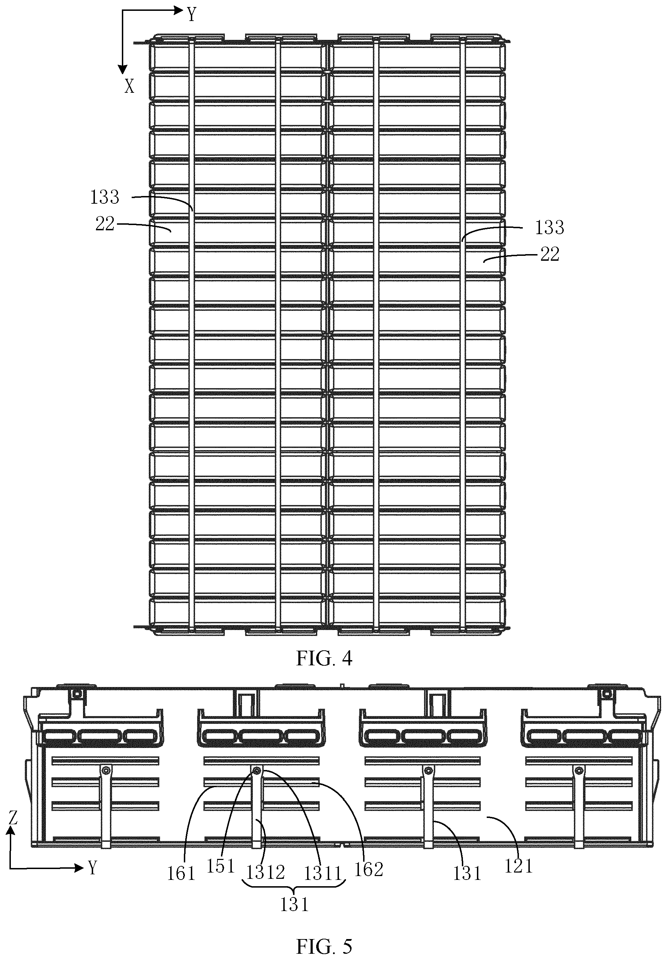

In some embodiments, the second wall 22 may be a wall disposed opposite to the first wall 21. Specifically, FIG. 4 shows a schematic diagram of a bottom of a battery cell group 201 in a battery 10 according to an embodiment of the present application. As shown in FIG. 2 to FIG. 4, each battery cell 20 of the plurality of battery cells 20 includes: a first wall 21 and a second wall 22 disposed opposite to each other, the main body part 133 passing across the second wall 22; electrode terminals disposed on the first wall 21, the electrode terminals being configured to output electrical energy; and a pressure relief mechanism 213 disposed on the first wall 21, the pressure relief mechanism 213 being configured to be actuated when an internal pressure or temperature of each battery cell 20 reaches a threshold, to relieve the internal pressure of each battery cell 20. In this way, the insulating packing strap 13 and the first end plate 121 as well as the second end plate 122 can limit the movement of the plurality of battery cells 20 in the first direction X, and the insulating packing strap 13 does not need to pass across the first wall 21, not affecting the electrode terminals and the pressure relief mechanism 213 disposed on the first wall 21. Moreover, due to the action of gravity, there may be relative movement in a direction of gravity between the plurality of battery cells 20 in the battery cell group 201, that is, movement along a direction perpendicular to the second wall 22. For example, during the transfer of the battery cell group 201, the battery cell group 201 is moved usually by clamping the two end plates. If the insulating packing strap 13 is not provided, some of the battery cells 20 may move down along the direction of gravity due to the action of gravity, especially the battery cells 20 located in the middle of the battery cell group 201, and they are likely to slide down along the direction of gravity. By setting the insulating packing strap 13 to pass across the second walls 22 of the plurality of battery cells 20 and extend along the first direction X, the movement of the battery cells 20 in battery cell group 201 along the direction of gravity can be reduced or avoided, and the dislocation of the battery cells 20 in the battery cell group 201 along the direction of gravity can be avoided.

In addition, if the battery 10 includes a plurality of battery cell groups 201, correspondingly, a plurality of insulating packing straps 13 are required to be provided, and in case that the main body part 133 of each insulating packing strap 13 passes across the second walls 22 of the plurality of battery cells 20, the plurality of insulating packing straps 13 may be disposed on the same surface for convenience of assembly. Moreover, when the plurality of battery cell groups 201 are disposed in the box of the battery 10, the space occupied by the plurality of battery cell groups 201 when they are disposed on the same surface is smaller than the space occupied by the plurality of battery cell groups 201 when they are disposed on different surfaces, which can improve space utilization of the battery 10, and further improve energy density of the battery 10.

In some embodiments, the battery 10 may further includes: a box configured to accommodate the battery cell group 201, the box including a third wall, and second walls 22 of the plurality of battery cells 20 being fixed to the third wall. The interior of the box included in the battery 10 is a hollow structure, and the plurality of battery cell groups 201 may be accommodated in the box. The box usually includes two portions, which are referred to as a first portion and a second portion receptively, and the first portion and the second portion are fasten together. Shapes of the first portion and the second portion may be determined according to the shape of at least one battery cell group 201 in the interior, and at least one of the first portion and the second portion has an opening. For example, the first portion and the second portion each may be a hollow cuboid and each of them has only one surface with an opening, the opening of the first portion is disposed opposite to the opening of the second portion, and the first portion and the second portion are fastened to each other to form a box with a closed chamber. For another example, only one of the first portion and the second portion may be a hollow cuboid with an opening, and the other is in a plate shape to cover the opening. For example, the second portion is a hollow cuboid and has only one surface with an opening, and the first portion is in a plate shape.

At least one battery cell group 201 included in the battery 10 is accommodated in the box, the second wall 22 of each battery cell 20 faces a wall of the box, which is referred to as a third wall here, that is, the second wall 22 of the battery cell 20 faces the third wall of the box. In order to fix the battery cells 20 in the box, the second walls 22 may be usually set to be fixed relatively to the third wall. For example, the second walls 22 of the battery cells 20 may be fixed to the third wall of the box by a binder. In addition, insulation is also required between the second walls 22 of the battery cells 20 and the third wall of the box to avoid short circuit. However, since the insulation effect of the binder is usually poor, it is also necessary to additionally provide an insulating structure between the second walls 22 of the battery cells 20 and the third wall of the box. For example, a surface of the third wall of the box facing the battery cells 20 may be electroplated with an insulating paint.

However, in the embodiments of the present application, since the insulating packing strap 13 passes across the second walls 22, the separation and insulation between the second walls 22 of the battery cells 20 and the third wall of the box can be realized through the insulating packing strap 13 without an additional insulating structure, which saves the insulating material and facilitates processing, improving the production efficiency of the battery 10.

In some embodiments, the thickness of the insulating packing strap 13 may be set according to practical application. For example, according to the insulation requirement between the second walls 22 of the battery cells 20 and the third wall of the box, the thickness of the insulating packing strap 13 may be set reasonably, especially the thickness of the main body part 133. For example, in order to ensure the insulation effect between the second walls 22 of the battery cells 20 and the third wall of the box, the thickness of the insulating packing strap 13 may be set to be greater than or equal to 0.5 millimeter (mm), especially the thickness of the main body part 133 of the insulating packing strap 13 may be set to be equal to 0.8mm, 1mm or 1.5mm, to ensure that the battery cells 20 are spaced apart from the third wall of the box by a certain distance when installed in the box of the battery 10, so as to ensure the insulation effect. In addition, in consideration of the limited internal space of the battery 10, the thickness of the insulating packing strap 13 should not be set too great. For example, the thickness of the main body part 133 of the insulating packing strap 13 may be set to be less than or equal to 5mm, but the embodiments of the present application are not limited thereto.

In some embodiments, the battery cell group 201 corresponds to at least two insulating packing straps 13. In an example that the battery cell 20 is a cuboid, if the battery cell group 201 is provided with only one insulating packing strap 13, it is necessary to increase the width of the insulating packing strap 13 in order to ensure that the insulation packaging strap meets the fixing requirements of the plurality of battery cells 20 in the battery cell group 201 and the structure is relatively stable. However, the insulating packing strap 13 with a great width is not easily fixed with the two end plates, and increases the assembly difficulty. Therefore, the battery cell group 201 may be set to correspond to at least two insulating packing straps 13, which can not only ensure that the fixing requirements of the plurality of battery cells 20 in the battery cell group 201 are met and the structure is stable, but also facilitate the realization of the relative fixing between each insulating packing strap 13 and the two end plates.

For example, as shown in FIG. 2 to FIG. 4, each battery cell group 201 may be correspondingly provided with two insulating packing straps 13, which is convenient for assembly and can save the material; moreover, it is also possible to set the two insulating packing straps 13 to be symmetrical with the center lines of the second walls of the battery cells 20, so that the distances between the second walls 22 of the battery cells 20 and the third wall of the box are basically consistent, that is, the battery cells 20 are not oblique relative to the third wall of the box, which further improves the stability of the battery 10.

The fixing way between the insulating packing strap 13 according to the embodiments of the present application and the two end plates will be explained below with reference to the accompanying drawings. Moreover, for the convenience of illustration, the embodiments of the present application are explained mainly by an example of the first end plate 121 of the two end plates.

In the embodiments of the present application, the two end parts include a first end part 131, and the first end part 131 includes a fixing region 1311; and the two end plates include a first end plate 121, a surface of the first end plate 121 away from the battery cell group 201 is provided with a fixing structure 15, and the fixing region 1311 is fixed with the fixing structure 15 to fix the first end part 131 to the first end plate 121. At least part of the region of the first end part 131 of the insulating packing strap 13 is the fixing region 1311. The relative fixing between the first end part 131 and the first end plate 121 can be realized by the fixing between the fixing region 1311 and the fixing structure 15 of the first end plate 121, which can be realized more easily and has a simple assembly process in comparison with the fixing by means of bonding, welding, or the like.

In some embodiments, the first end part 131 further includes a connecting region 1312, and the fixing region 1311 is connected with the main body part 133 through the connecting region 1312; and the surface of the first end plate 121 away from the battery cell group 201 is provided with a restraint structure 16, and the restraint structure 16 is configured to limit a position of the connecting region 1312. Given that the insulating packing strap 13 is a strip structure, part of the region of the first end part 131 is the fixing region 1311, and part of it is the connecting region 1312. The position of the connecting region 1312 on the first end plate 121 can be limited through the restraint structure 16, avoiding the fixing of the fixing region 1311 of the first end part 131, and mislocation of another region may cause the movement or mislocation of the main body part 133, and further affect the stability of the battery 10.

The fixing structure 15 and the restraint structure 16 according to the embodiments of the present application can be realized in variety of ways.

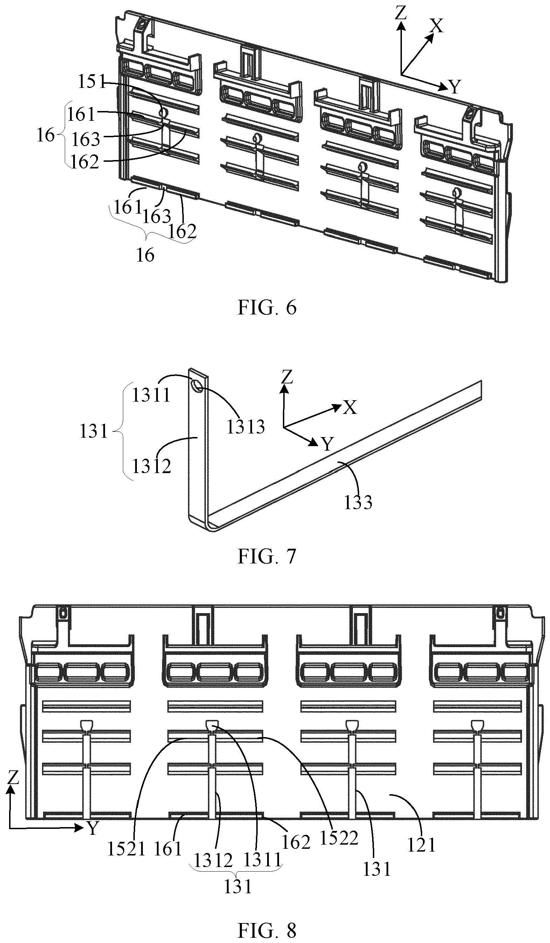

FIG. 5 shows a schematic diagram of a first end plate 121 fixed with a first end part 131 according to an embodiment of the present application; FIG. 6 shows a schematic structural diagram of a first end plate 121 according to an embodiment of the present application, for example, the first end plate 121 in FIG. 6 may be the first end plate 121 shown in FIG. 5; and FIG. 7 shows a schematic diagram of a partial structure of an insulating packing strap 13 according to an embodiment of the present application, for example, a first end part 131 of the insulating packing strap 13 in FIG. 7 may be the first end part 131 shown in FIG. 5.

For the restraint structure 16, as shown in FIG. 5 to FIG. 7, the restraint structure 16 includes two protruding structures 161 and 162 protruding from the surface of the first end plate 121 away from the battery cell group 201 toward a direction away from the first end plate 121, the two protruding structures 161 and 162 have a first gap 163 in a second direction Y, the connecting region 1312 is located in the first gap 163 to limit the position of the connecting region 1312, and the second direction Y is a width direction of the connecting region 1312. By disposing the connecting region 1312 in the first gap 163 extending in the second direction Y, the displacement of the connecting region 1312 in multiple directions can be limited. In some embodiments, by adjusting the length of the first gap 163 in the second direction Y to be approximately equal to the width of the connecting region 1312, the connecting region 1312 cannot move too much in the first gap 163. For example, the connecting region 1312 may move along a third direction Z on the surface of the first end plate 121, and the third direction Z is perpendicular to the second direction Y The connecting region 1312 cannot move in other directions, which effectively defines the position of the connecting region 1312, ensures the stability of the insulating packing strap 13, and avoids the slide and movement of the insulating packing strap 13 to affect the stability of the battery cells 20 in the battery 10.

It should be understood that, the first end plate 121 according to the embodiments of the present application may be provided with one or more restraint structures 16 in the third direction Z. For example, as shown in FIG. 5 to FIG. 7, three restraint structures 16 may be provided in the third direction Z, and the three restraint structures 16 may be configured to limit the connecting region 1312 of the same insulating packing strap 13 to ensure the restraint effect. In addition, the first end plate 121 may also be provided with one or more restraint structures 16 in the second direction Y For example, as shown in FIG. 5 to FIG. 7, four restraint structures 16 may be provided in the second direction Y to meet the location limitation of the connecting regions 1312 of the plurality of insulating packing straps 13.

In some embodiments, as shown in FIG. 5 to FIG. 7, the two protruding structures 161 and 162 are arranged along the second direction Y Given that the surface of the first end plate 121 away from the battery cells 20 faces the box, in order to ease the collision between the first end plate 121 and the box, the surface of the first end plate 121 away from the battery cells 20 is usually provided with a protruding rib structure, and the rib structure may be used to reinforce the structural strength of the first end plate 121 and to ease the collision between the first end plate 121 and the box, avoiding excessive pressure on the battery cells 20 caused by the side wall of the box, so as not to affect the performance of the battery cells 20. Therefore, the restraint structure 16 according to the embodiments of the present application may be the rib structure on the first end plate 121 to save components on the first end plate 121 for convenience of processing and realization. The two protruding structures 161 and 162 included in each restraint structure 16 are arranged and extend along the second direction Y, the two protruding structures 161 and 162 may be used as two rib structures, which can be used to limit the position of the connecting region 1312, and to ease the collision between the first end plate 121 and the box.

In the embodiments of the present application, for the fixing structure 15 and the fixing region 1311, as shown in FIG. 5 to FIG. 7, the fixing region 1311 is provided with a through hole 1313, the fixing structure 15 includes a staple 151, and the staple 151 passes through the through hole 1313 to fix the fixing region 1311. The staple 151 and the through hole 1313 are mutually matched. The staple 151 only passes through the through hole 1313 to realize the fixing between the insulating packing strap 13 and the first end plate 121, and the structure is simple, easily operates, and takes up little space. For example, as shown in FIG. 5 to FIG. 7, the staple 151 may be disposed between multiple rib structures arranged along the third direction Z, which can not only meet the position requirement of the connecting region 1312, but also not affect the setting of the rib structures.

In some embodiments, the shape and size of the through hole 1313 may be set according to practical application; and the shape and size of the staple 151 may also be set according to practical application, for example, according to the shape and size of the through hole 1313. For example, the through hole 1313 may be circular for convenience of processing; the diameter of the through hole 1313 is less than the width of the fixing region 1311, so that the first end part 131 of the insulating packing strap 13 is not damaged and broken easily; and correspondingly, the staple 151 may also be set to be cylindrical, the diameter of the staple 151 may be set to be slightly greater than that of the through hole 1313 to avoid the through hole 1313 to slip out relative to the staple 151 after the staple 151 passes through the through hole 1313, so as not to affect the stability of the battery 10.

In some embodiments, the number of through holes 1313 of the first end part 131 of each insulating packing strap 13 may be set according to practical application. For example, the first end part 131 of each insulating packing strap 13 may be provided with only one through hole 1313 to meet the fixing of the first end plate 121 with the first end part 131, which is convenient for processing and assembly.

It should be understood that, by performing the fixing in a way such that the staple 151 and the through hole 1313 are mutually matched, the fixing region 1311 and the connecting region 1312 of the first end part 131 of the insulating packing strap 13 may be made of the same material, and set to have the same size, which is convenient for processing and is realized easily.

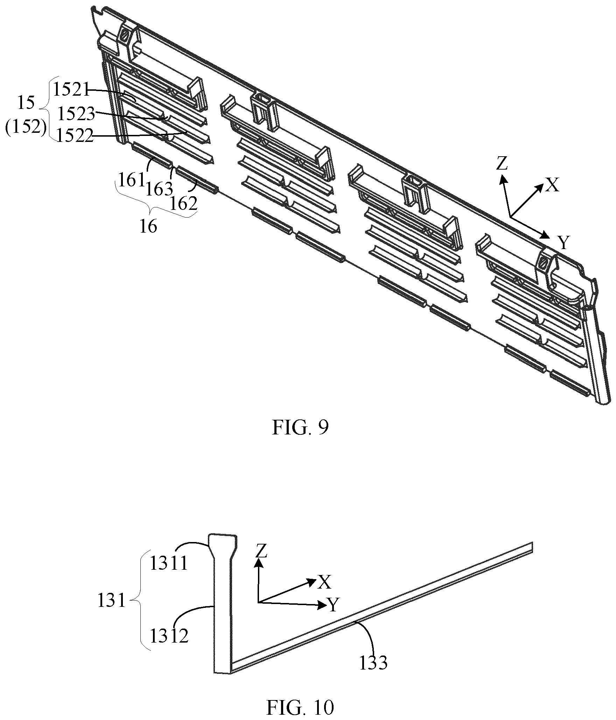

The fixing structure 15 according to the embodiments of the present application can be realized in other ways. FIG. 8 shows another schematic diagram of a first end plate 121 fixed with a first end part 131 according to an embodiment of the present application; FIG. 9 shows another schematic structural diagram of a first end plate 121 according to an embodiment of the present application, for example, the first end plate 121 in FIG. 9 may be the first end plate 121 shown in FIG. 8; and FIG. 10 shows another schematic diagram of a partial structure of an insulating packing strap 13 according to an embodiment of the present application, for example, a first end part 131 of the insulating packing strap 13 in FIG. 10 may be the first end part 131 shown in FIG. 8.

As another embodiment, as shown in FIG. 8 to FIG. 10, the fixing structure 15 includes a slot 152, at least part of the connecting region 1312 is accommodated in the slot 152, the fixing region 1311 is located outside the slot 152, a width of the fixing region 1311 is greater than a width of the connecting region 1312, the width of the fixing region 1311 is greater than a width of the slot 152 along the second direction Y so that the fixing region 1311 is incapable of passing through the slot 152 in a third direction Z to fix the fixing region 1311 with the fixing structure 15, the second direction Y is a width direction of the connecting region 1312, and the third direction Z is perpendicular to the second direction Y and the first direction X. Specifically, the fixing structure 15 may be set to include the slot 152, and the slot 152 may accommodate at least part of the connecting region 1312. For example, the width of the connecting region 1312 may be set to be approximately equal to the width of the bottom wall of the slot 152 along the second direction Y, so that at least part of the connecting region 1312 is located in the slot 152, for example, at least part of the connecting region 1312 along the third direction Z is located in the slot 152. The width of the fixing region 1311 is greater than that of the connecting region 1312, and is greater than that of the width of the slot 152, the fixing region 1311 is disposed outside the slot 152, and the fixing region 1311 is incapable of passing through the slot 152 along the third direction Z, which can realize the relative fixing between the fixing region 1311 and the fixing structure 15.

In some embodiments, as shown in FIG. 8 to FIG. 10, in order to further limit the movement of the fixing region 1311 and the connecting region 1312 in the slot 152, the width at the opening of the slot 152 along the second direction Y may be set to be less than the width of the connecting region 1312, which can avoid the connecting region 1312 to slide out of the opening of the slot 152, that is, the movement of the connecting region 1312 and the fixing region 1311 along the first direction X perpendicular to the first end plate 121 can be limited.

It should be understood that, for the convenience of installation, the fixing region 1311 and the connecting region 1312 of the first end part 131 may be made of different materials. The material strength of the fixing region 1311 of the first end part 131 may be set to be greater than the material strength of the connecting region 1312, or the material hardness of the fixing region 1311 of the first end part 131 is set to be greater than the material hardness of the connecting region 1312. Specifically, if the width at the opening of the slot 152 along the second direction Y is set to be less than the width of the connecting region 1312, during installation, the connection region 1312 may enter the slot 152 through the opening of the slot 152 after rotated at a certain angle, and then be restored to the original flat state. Therefore, the material strength or hardness of the connecting region 1312 may be small, so as to facilitate rotation and restoring. The fixing region 1311 is located outside the slot 152, and in order to ensure that the fixing region 1311 does not fall off along the third direction Z, the material strength or hardness of the fixing region 1311 may be increased, so that the fixing region 1311 does not deform and passes through the slot 152 along the third direction Z.

In some embodiments, as shown in FIG. 8 to FIG. 10, the fixing structure 15 includes: a first protruding structure 1521 and a second protruding structure 1522 protruding from the surface of the first end plate 121 away from the battery cell group 201 toward a direction away from the first end plate 121, the first protruding structure 1521 and the second protruding structure 1522 are arranged along the second direction Y, and the first protruding structure 1521 and the second protruding structure 1522 have a second gap 1523 in the second direction Y to form the slot 152. Similar to the restraint structure 16, the fixing structure 15 may also reuse the rib structure on the surface of the first end plate 212, that is, the first protruding structure 1521 and the second protruding structure 1522 may be rib structures on the surface of the first end plate 121, and may be used to form the slot 152 and further to ease the collision between the first end plate 121 and the box. In the way, it is not necessary to additionally provide another structure as the fixing structure 15, which facilitates realization and saves components and space.

It should be understood that, as shown in FIG. 8 and FIG. 10, for the multiple rib structures on the surface of the first end plate 121 arranged along the third direction Z, some of the rib structures may be used to realize the fixing structure 15, that is, to realize the slot 152, and some of the rib structures may be used to realize the restraint structure 16. For example, as shown in FIG. 8 to FIG. 10, for four adjacent rib structures arranged along the third direction Z, two of them may be used to realize the fixing structure 15, that is, to realize the slot 152, and the last rib structure is used to realize the restraint structure 16; or different from FIG. 8 to FIG. 10, one rib structure may be set to realize the fixing structure 16, two rib structures are set to realize the restraint structure 16, but the embodiments of the present application are not limited thereto.

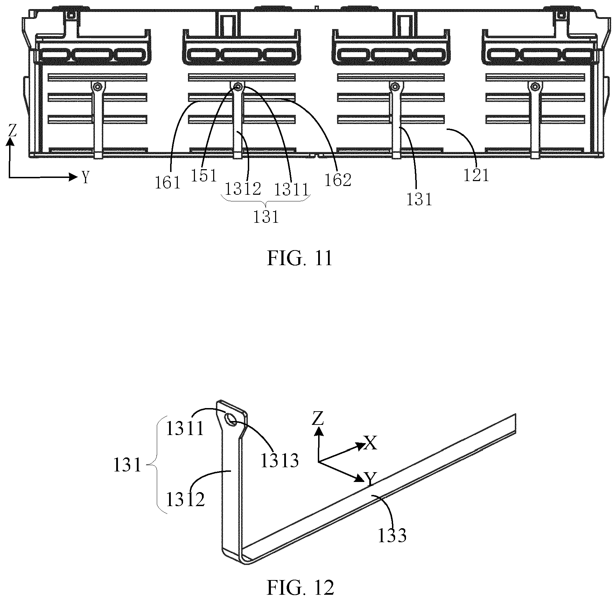

In the embodiments of the present application, the above two implementations of the first end part 131 may be used independently, or in combination with other implementations, or in combination with each other. For example, FIG. 11 shows a further schematic diagram of a first end plate 121 fixed with a first end part 131 according to an embodiment of the present application; and FIG. 12 shows a further schematic diagram of a partial structure of an insulating packing strap 13 according to an embodiment of the present application, for example, a first end part 131 of the insulating packing strap 13 in FIG. 12 may be the first end part 131 shown in FIG. 11.

In some embodiments, as shown in FIG. 11 and FIG. 12, the fixing region 1311 of the first end part 131 includes a through hole 1313, and the width of the fixing region 1311 is greater than that of the connecting region 1312. When the first end part 131 is fixed with the fixing structure 15 of the first end plate 121, the fixing structure 15 includes a staple 151, and the staple 151 passes thought the through hole 1313 to realize the fixing of the first end part 131 with the first end plate 121. In addition, the restraint structure 16 includes a first gap 163, the connecting region 1312 is located in the first gap 163, and the width of the fixing region 1311 is greater than the width of the first gap 163 along the second direction Y, so that the fixing region 1311 cannot pass through the first gap 163 along the third direction Z to further fix the fixing region 1311 and limit the movement of the connecting region 1312, thereby fixing the first end part 131 with the first end plate 121. In this way, the fixing region 1311 of the first end part 131and the fixing structure 15 are fixed in multiple ways, which can reinforce the fixing effect, and ensure the stability between the first end part 131 and the first end plate 121.

It should be understood that, the above is mainly explained by the fixing way between the first end plate 121 and the first end part 131, but the relevant description also applies to the fixing between the second end plate 122 and the second end part 132 of the insulating packing strap 13, which will not be repeated redundantly here for brevity. In addition, the fixing way between the first end plate 121 and the first end part 131 may be the same as or different from the fixing way between the second end part 122 and the second end part 132, but the embodiments of the present application are not limited thereto. For example, the fixing ways of the two end parts 131 and 132 may be set to be the same for convenience of processing and assembly.

Although the present application has been described with reference to the preferred embodiments thereof, various modifications can be made thereto without departing from the scope of the present application, and the components therein can be replaced with equivalents. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A battery, comprising:
a battery cell group, the battery cell group comprising a plurality of battery cells arranged along a first direction;
two end plates respectively abutting against two end faces of the battery cell group disposed opposite to each other, the two end faces being perpendicular to the first direction; and
an insulating packing strap, the insulating packing strap comprising two end parts and a main body part connecting the two end parts, the two end parts being respectively fixed with the two end plates, and the main body part extending along the first direction, so that the insulating packing strap fixes the battery cell group.

2. The battery according to claim 1, wherein each battery cell of the plurality of battery cells comprises:
a first wall and a second wall disposed opposite to each other, the main body part passing across the second wall;
electrode terminals disposed on the first wall, the electrode terminals being configured to output electrical energy; and
a pressure relief mechanism disposed on the first wall, the pressure relief mechanism being configured to be actuated when an internal pressure or temperature of each battery cell reaches a threshold, to relieve the internal pressure of each battery cell.

3. The battery according to claim 2, wherein the battery further comprises:
a box configured to accommodate the battery cell group, the box comprising a third wall, and second walls of the plurality of battery cells being fixed to the third wall.

4. The battery according to any one of claims 1 to 3, wherein the two end parts comprise a first end part, and the first end part comprises a fixing region; and
the two end plates comprise a first end plate, a surface of the first end plate away from the battery cell group is provided with a fixing structure, and
the fixing region is fixed with the fixing structure to fix the first end part to the first end plate.

5. The battery according to claim 4, wherein the first end part further comprises a connecting region, and the fixing region is coupled with the main body part through the connecting region; and
the surface of the first end plate away from the battery cell group is provided with a restraint structure, and the restraint structure is configured to limit a position of the connecting region.

6. The battery according to claim 5, wherein the restraint structure comprises two protruding structures protruding from the surface of the first end plate away from the battery cell group toward a direction away from the first end plate, the two protruding structures have a first gap in a second direction, the connecting region is located in the first gap to limit the position of the connecting region, and the second direction is a width direction of the connecting region.

7. The battery according to claim 6, wherein the two protruding structures are arranged along the second direction.

8. The battery according to any one of claims 4 to 7, wherein the fixing region is provided with a through hole, the fixing structure comprises a staple, and the staple passes through the through hole to fix the fixing region.

9. The battery according to any one of claims 5 to 7, wherein the fixing structure comprises a slot, at least part of the connecting region is accommodated in the slot, the fixing region is located outside the slot,
a width of the fixing region is greater than a width of the connecting region, the width of the fixing region is greater than a width of the slot along a second direction, so that the fixing region is incapable of passing through the slot along a third direction to fix the fixing region with the fixing structure, the second direction is a width direction of the connecting region, and the third direction is perpendicular to the second direction and the first direction.

10. The battery according to claim 9, wherein the fixing structure comprises: a first protruding structure and a second protruding structure protruding from the surface of the first end plate away from the battery cell group toward a direction away from the first end plate, the first protruding structure and the second protruding structure are arranged along the second direction, and the first protruding structure and the second protruding structure have a second gap in the second direction to form the slot.

11. The battery according to any one of claims 1 to 10, wherein the battery cell group corresponds to at least two insulating packing straps.

12. A power consumption device, comprising:
the battery according to any one of claims 1 to 11, the battery being configured to provide electrical energy for the power consumption device.
